# EUROPEAN PATENT APPLICATION

(11) **EP 1 156 676 A2**
(43) Date of publication of application: **21.11.2001**
(21) Application number: 01304049.8
(22) Date of filing: 03.05.2001
(51) Int. Cl.: H04N 7/16, H04N 7/167

(54) **Apparatus and method for receiving multichannel signals**

(30) Priority: 18.05.2000 KR 2000026762
(71) Applicant: Handan BroadInfoCom, Seoul (KR)
(72) Inventor: Park, Joong-Je, Dongjak-ku, Seoul (KR); Jeong, Ki-Won, Kunpo-city, Kyungki-do (KR); Kwak, Chang-Won, Suwon-city, Kyungki-do (KR)
(74) Representative: Mounteney, Simon James

(57) **Abstract**

A multichannel signal receiver which comprises: a descrambler for descrambling scrambled digital satellite broadcasting signals; a signal receiver for receiving and outputting a broadcasting signal; a signal output unit for demultiplexing and demodulating the broadcasting signal, and outputting audio and video signals; a common interface controller for checking whether the broadcasting signal is a paid or a free signal, outputting the broadcasting signal to the signal output unit when the broadcasting signal is a free signal, and outputting the broadcasting signal to the descrambler and outputting the descrambled broadcasting signal to the signal output unit when the broadcasting signal is a paid signal; and a host CPU for controlling the signal receiver, the common interface controller and the signal output unit.

## Description

### BACKGROUND OF THE INVENTION

### (a) Field of the Invention

The present invention relates to an apparatus and method for receiving multichannel signals. More specifically, the present invention relates to a multichannel signal receiving apparatus and method for a digital satellite broadcasting receiver to concurrently receive scrambled multichannel signals using a common interface (Cl) method.

### (b) Description of the Related Art

Most digital satellite broadcasting methods adopt the moving picture experts group (MPEG) method. The MPEG-2 method for broadcasting the MPEG standard is defined by the international standards ISO/IEC 13818-1 to 3. The ISO/IEC 13818-1 defines the system standard, the ISO/IEC 13818-2 defines the video standard, and the ISO/IEC 13818-3 defines the audio standard. Here, the system standard is a rule for transport stream (TS) packets that are time-multiplexed signal streams. The 188-byte transport stream is divided into a header and a payload. At this time, the header has information that notifies of a start of a signal and has a packet identifier (PID) number that shows what signals are provided in the payload, and the payload carries information on images, sound and more. At this instance, the PID number enables de-multiplexing of the time-multiplexed signals, and a user can distinguish whether a present packet is a video packet, an audio packet or an additional information packet by using the PID number.

General digital satellite broadcasting is separated into paid broadcasting and free broadcasting.

In order to concurrently receive free digital satellite broadcasting, a plurality of tuners and MPEG demultiplexers and decoders should be installed, and hence it is not easy to concurrently watch the broadcasts.

### SUMMARY OF THE INVENTION

It is an object of the present invention to provide an apparatus for concurrently receiving multichannel signals scrambled in the Cl method.

It is another object of the present invention to provide a control method for an apparatus for receiving multichannel signals.

In one aspect of the present invention, in a satellite broadcasting receiver for receiving scrambled or unscrambled digital satellite broadcasting signals, demultiplexing the signals, decoding the signals and outputting audio and video signals, a multichannel signal receiver comprises: a descrambler, including a plurality of descrambling units, for descrambling the scrambled digital satellite broadcasting signals; a signal receiver for receiving at least one digital satellite broadcasting signal via at least one antenna, and outputting the digital satellite broadcasting signal; a signal output unit for demultiplexing the digital satellite broadcasting signal, demodulating the signal, and outputting audio and video signals; a common interface controller for checking whether the digital satellite broadcasting signal provided by the signal receiver is a paid signal or a free signal, outputting the digital satellite broadcasting signal to the signal output unit when the digital satellite broadcasting signal is a free signal, and outputting the digital satellite broadcasting signal to the descrambler and outputting a descrambled digital satellite broadcasting signal to the signal output unit when the digital satellite broadcasting signal is a paid signal; and a host central processing unit (CPU) for controlling the signal receiver, the common interface controller and the signal output unit.

In another aspect of the present invention, in a satellite broadcasting signal receiving method for receiving scrambled or unscrambled digital satellite broadcasting signals, demultiplexing the signals, decoding the signals and outputting audio and video signals, a method for controlling a multichannel signal receiver comprises: (a) selecting at least one receiving channel of the digital satellite broadcasting signals according to a driving of the receiver; (b) checking a receipt state of a broadcasting signal of the selected broadcasting signals in (a), and outputting a warning message that no signal is received when the broadcasting signal is not received, and checking whether the broadcasting signal is a paid signal when the broadcasting signal is received; (c) demultiplexing the corresponding broadcasting signal, decoding the signal and outputting the signal when the received broadcasting signal is that of a free broadcast in (b); and (d) descrambling the corresponding broadcasting signal, demultiplexing the descrambled broadcasting signal and decoding the same when the received broadcasting signal is that of a paid broadcast in (b).

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 shows an apparatus for receiving multichannel signals according to a preferred embodiment of the present invention;
FIG. 2 shows a detailed controller of FIG. 1;
FIG. 3 shows an apparatus for receiving double channel signals according to the preferred embodiment of the present invention; and
FIG. 4 shows a flow chart of a method for receiving multichannel signals according to the preferred embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

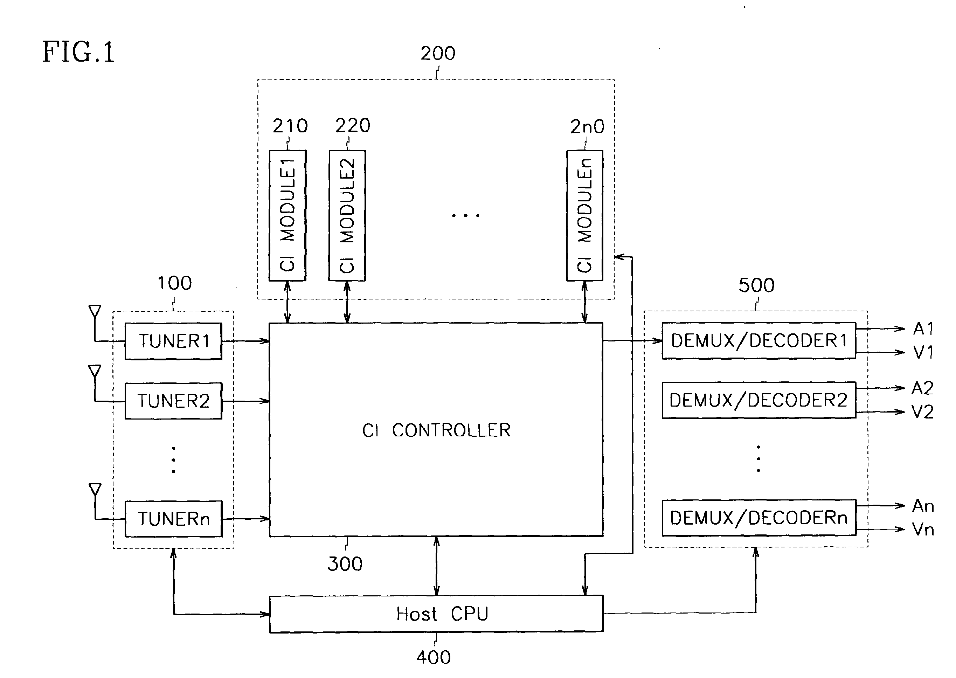

FIG. 1 shows an apparatus for receiving multichannel signals according to a preferred embodiment of the present invention.

Referring to FIG. 1, the apparatus for receiving multichannel signals comprises a signal receiver 100, a descrambler 200, a Cl controller 300, a host central processing unit (CPU) 400 and a signal output unit 500.

The signal receiver 100 comprising a plurality of tuners receives a plurality of digital satellite broadcasting signals via antennas coupled to the respective tuners and outputs the same to the Cl controller 300.

The descrambler 200 comprising a plurality of Cl modules 210 to 2n0 descrambles the scrambled satellite broadcasting signals input via the Cl controller 300, and outputs the descrambled digital satellite broadcasting signals to the Cl controller 300. Here, the digital satellite broadcasting signals can be scrambled through various methods such as Viaccess, Conax, Cryptwork, Irdeto and Nagravision.

The Cl controller 300 checks the digital satellite broadcasting signals provided by the signal receiver 100, and when the signals are found to be free broadcasting signals, outputs the signals to the signal output unit 500, and when the signals are found to be paid broadcasting signals, outputs the same to the descrambler 200, receives the descrambled digital satellite broadcasting signals from the descrambler 200 and outputs the same to the signal output unit 500.

The host CPU 400 controls the signals receiver 100, the Cl controller 300 and the signal output unit 500. In detail, the host CPU 400 resets and initializes the Cl controller 300 according to driving of the apparatus for receiving the multichannel signals of the digital satellite broadcasting device, and when the CI controller 300 checks states of the respective Cl modules of the descrambler 200 and transmits check results to the host CPU 400, the host CPU 400 initializes the respective Cl modules. In this instance, the host CPU 400 checks the Cl modules and determines which Cl modules are being used so that additional satellite broadcasting signals can be captured on separate Cl modules.

The signal output unit 500 demultiplexes and demodulates the satellite broadcasting signals of free broadcasts provided by the Cl controller 300 or descrambled satellite broadcasting signals, and outputs audio/video signals (A1, V1), (A2, V2), ..., (An, Vn).

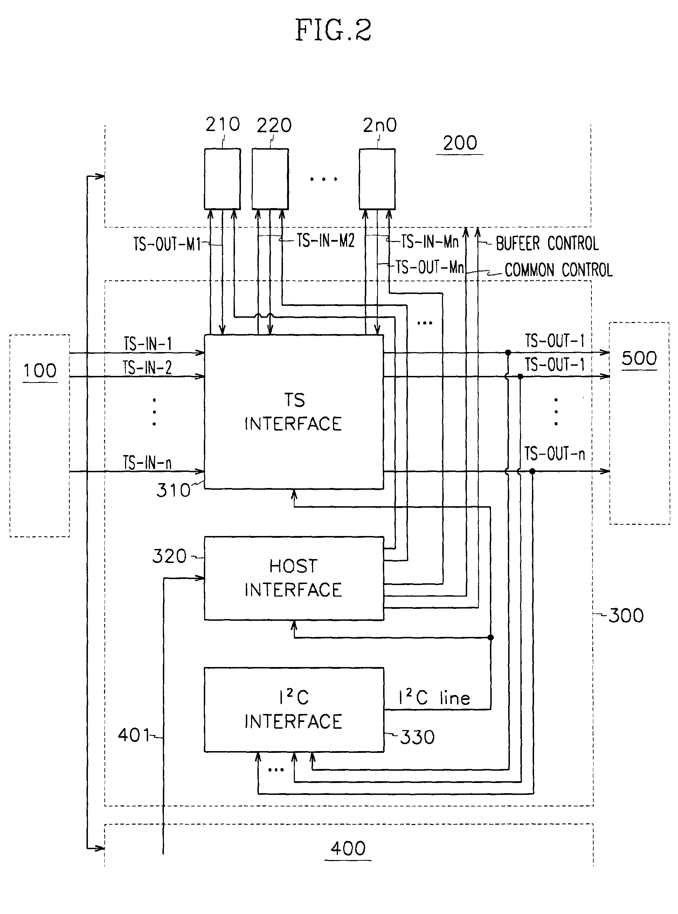

FIG. 2 shows a detailed Cl controller of FIG. 1.

Referring to FIG. 2, the Cl controller comprises a TS interface 310, a host interface 320 and an inter IC (I²C) interface 330.

The TS interface 310 receives n TS signals from the signal receiver 100, transmits and receives the TS signals to/from the m Cl modules, and outputs the n TS signals to the signal output unit 500. Here, the signals TS_IN_1, TS_IN_2, ..., TS_IN_n, TS_OUT_1, TS_OUT_2, ..., TS_OUT_n, TS_IN_M1, TS_IN_M2, ..., TS_IN_Mm, TS_OUT_M1, TS_OUT_M2, ..., TS_OUT_Mm have a matrix structure and can be connected to any TS input and output terminals, and each connection is controlled by the host CPU 400 via an I²C line. If the signal TS_IN_n is not a scrambling signal but a free broadcasting signal, the signal TS_IN_n is directly output to the signal output terminal 500.

The host interface 320 provided between the host CPU 400 and the Cl modules 210, 220, ..., 2n0 controls the Cl modules, and control signals 401 connected to the host CPU 400 include a reset signal, a chip enable (CE) signal, a read (RD) signal, a write (WR) signal, a wait and acknowledge (WAIT/ACK) signal and an interrupt (INT) signal. Signals output from the host interface 320 and provided to the descrambler 200 are divided into a first group of signals that are provided to the respective Cl modules and control the modules and a second group of signals that are provided to the descrambler and control the descrambler.

In detail, the signals for controlling the Cl modules comprise a reset signal, a card detect (CD) signal, a card enable (CDE) signal, a ready and acknowledge (READY/ACK) signal, and a wait signal, and the signals for controlling the descrambler 200 comprise an out enable (OE) signal, a write enable (WE) signal, a read signal and a write signal.

Also, the host interface 320 controls buffers of an address and data bus. The address and data bus connects the host CPU 400 with the descrambler 200. A controllable buffer is provided to each bus line. Also, since the address and data bus shares the bus between the host CPU 400 and a memory (not illustrated), a buffer is used so as to not mix the module data with the memory data. The host interface 320 controls on/off operations of the buffer.

The I²C interface 330 is operated according to at least one output signal TS_OUT_1, TS_OUT_2, ..., TS_OUT_n output from the TS interface 310 and input to the signal output unit 500 so as to control the driving of the TS interface 310 and the host interface 320.

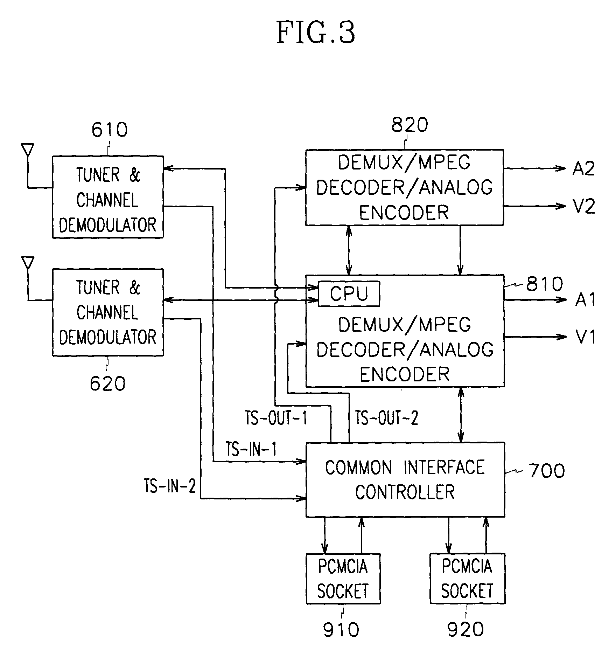

FIG. 3 shows an apparatus for receiving double channel signals according to the preferred embodiment of the present invention.

Referring to FIG. 3, the apparatus for receiving double channel signals comprises a first tuner and channel demodulator 610, a second tuner and channel demodulator 620, a Cl controller 700, a first demultiplexer/MPEG decoder/analog encoder 810, a second demultiplexer/MPEG decoder/analog encoder 820, a first PCMCIA socket 910 and a second PCMCIA socket 920, and receives multiscrambled satellite broadcasting signals via the Cl method and outputs the same.

The first and second tuner and channel demodulators 610 and 620 respectively receive different satellite broadcasting signals via the antennas and output the received TS to the Cl controller 700. Here, the TS signals are not yet descrambled. The host CPU 812 installed in the first demultiplexer/MPEG decoder/analog encoder 810 controls the respective first and second tuner and channel demodulators 610 and 620.

When the host CPU 812 initializes the Cl controller 700, a conditional access module (CAM) (not illustrated) installed in the first and second PCMCIA sockets 910 and 920 is initialized. First, when the Cl controller 700 is initialized, the first input signal TS_IN_1 which is a locked one among the channel signals provided by the first and second tuner and channel demodulators 610 and 620, is provided to the second demultiplexer/MPEG decoder/analog encoder 820 as a first output signal TS_OUT_1 format.

The host CPU 812 determines whether the TS are those of free or paid broadcasting, and when the TS are those of free broadcasting, the host CPU 812 encodes the TS into analog signals using an MPEG3 decoder and outputs video and audio signals.

When the TS are those of paid broadcasting, their scrambling method is checked, and an instruction signal is provided to the Cl controller 700 so as to connect the input and output terminals of the corresponding CAM, and the Cl controller 700 inputs the TS to the corresponding CAM using a matrix switch, and outputs the signals descrambled and fed back to the demultiplexer. Next, the Cl controller 700 encodes the signals into analog signals using an MPEG2 decoder and outputs video and audio signals.

As described above, in order to concurrently receive the scrambled broadcasting signals of two channels and descramble the same and respectively output video and audio signals, the Cl controller 700 drives a matrix switch as follows.

The Cl controller 700 receives the first and second input signals TS_IN_1 and TS_IN_2 from the first and second tuner and channel demodulators 610 and 620, and supplies one of the same to the first PCMCIA socket 910 and the other one to the second PCMCIA socket 920. When the first and second input signals TS_IN_1 and TS_IN_2 are those of free broadcasting, the Cl controller 700 respectively outputs the same to the first and second demultiplexer/MPEG decoder/analog encoders 810 and 820.

Preferred embodiments for receiving two satelite broadcasting signals via the antennas and outputting the same will now be described.

In the case only a single transponder (TP) source, that is, the TS_IN_1 is used, when the Cl controller 700 is initialized, the host CPU 812 analyzes the first input signal TS_IN_1 to check whether the first input signal is either the signal of a free broadcast or that of a paid broadcast. When the signal is that of a free broadcast, the TS is transmitted to the first demultiplexer/MPEG decoder/analog encoder 810 and the first demultiplexer/MPEG decoder/analog encoder 810 outputs first audio and video signals A1 and V1.

When the TS is that of a paid broadcast, the host CPU 812 checks the scrambling method, transmits an instruction signal so as to be connected to a corresponding PCMCIA socket to the Cl controller 700, and the Cl controller 700 connects the matrix switch to the PCMCIA socket. When the channel is changed and the host CPU 812 receives the broadcasting of another scrambling method, the host CPU 812 checks the type of the scrambling method and notifies the CI controller of which PCMCIA pocket to use, and the Cl controller 700 selects the desired PCMCIA socket.

An operation of using a plurality of TP sources is identical with that of using a single TP source. However, in the case of receiving a plurality of TP sources scrambled by an identical method, some points should be considered.

For example, in the case the first and second input signals TS_IN_1 and TS_IN_2 are scrambled by an identical method, if two PCMCIA sockets are used, the host CPU 812 provides the input signals to the respective PCMCIA sockets. However, if only one PCMCIA socket exists, the first input signal is provided to the PCMCIA socket, and since there is no further PCMCIA socket to which the second input signal is supplied, the host CPU 812 outputs a time-lapse message.

An operation of the apparatus for receiving the multichannel signals will now be described in detail.

When the power is supplied to the digital satellite broadcasting receiving system, the system checks whether a channel receiver of the two channel demodulators is locked, checks whether it is a free broadcast, and when it is a free broadcast, the system outputs signals not to the PCMCIA sockets, that is the Cl modules, but to the demultiplexer, performs an MPEG2 decoding process and an analog encoding process on the signals, and finally outputs the audio and video signals.

When it is paid broadcasting, since it is scrambled paid broadcasting, the system checks whether a CAM is installed in the PCMCIA socket, and when the CAM is identical with that of the paid broadcast, the scrambled broadcasting signals are supplied. The system descrambles the scrambled broadcasting signals and outputs results to the demultiplexer. In this instance, if a CAM of an identical method is inserted into the PCMCIA socket, the system outputs signals of the PCMCIA socket to another PCMCIA socket, outputs results to the demultiplexer, performs an MPEG2 decoding process and an analog encoding process on the signals, and outputs the audio and video signals.

When the CAM in the PCMCIA socket 910 has a different scrambling method from the scrambled broadcasting method, or the CAM has an identical scrambling method and is not inserted into the PCMCIA socket, the scrambled broadcasting signals are provided to the second PCMCIA socket 920. In this instance, only when the CAM inserted into the first PCMCIA socket 920 is a CAM having a method identical with that of the scrambled paid broadcast, are the scrambled paid broadcasting signals supplied.

In a case different from the above-noted one, since the first and second PCMCIA sockets 910 and 920 have no CAM, or have a CAM but do not have an adequate smart card, the system displays a warning message.

When another channel receiver is selected, it is determined whether the channel is locked in the same way as the above-noted method, it is checked whether it is a free broadcast, and when it is a free broadcast the Cl controller outputs the broadcasting signals to a demultiplexer which is not used by the above-noted channel. When it is a paid broadcast, the scrambled paid broadcasting signals are supplied to an unused Cl module slot, and here a CAM that has a scrambling method identical with that of the scrambled broadcasting signals is inserted into the unused Cl module slot. When other channel signals are supplied, the system controls in a method identical with that of the above-described channel signal processing method.

A method for processing the Cl controller will now be described referring to Table 1.

**Table 1**

| Cl input / Cl output | | TS_OUT_1 | TS_OUT_2 |
|---|---|---|---|
| Free broadcasting | TS_IN_1 | Cl passing | |
| | TS_IN_2 | | Cl passing |
| In the case TS_IN_1 is a paid broadcast | | Cl module A(910)/ | Cl module A(910)/ |
| | | Cl module B(920)/ | Cl module B(920)/ |
| | | Cl module A(910) to | TS_IN_2 passing |
| | | B(920)/ | |
| | | TS_IN_2 passing | |
| In the case TS_IN_2 is a paid broadcast | | Cl module A(910)/ | Cl module A(910)/ |
| | | Cl module B(920)/ | Cl module B(920)/ |
| | | CI module A(910) to | TS_IN_1 passing |
| | | B(920)/ | |
| | | TS_IN_1 passing | |
| In the case TS_IN_1 and 2 are paid broadcasts | | Cl module A(910)/ | Cl module A(910)/ |
| | | Cl module B(920)/ | Cl module B(920) |
| | | Cl module A(910) to | |
| | | B(920) | |

Here, respective outputs cannot concurrently select an identical input, but are only coupled to one input terminal.

As shown, when the first and second input signals TS_IN_1 and TS_IN_2 are those of a free broadcast, the Cl controller 700 outputs the first and second input signals without providing the same to the Cl modules 910 and 920. In this instance, the output first and second input signals can be provided to the first and second output signal paths TS_OUT_1 and TS_OUT_2. However, one output cannot be coupled to two inputs simultaneously.

When the first input signal is that of a paid broadcast, since the second input signal is that of a free broadcast or has no signal, the second input signal is passed. The first input signal can be output as the first and second output signals. In this instance, the connection between the input and output signals is varied according to the CAM inserted into the Cl module. That is, when a CAM that is identical with that of the paid broadcast of the first input signal is inserted into the first Cl module, that is, the PCMCIA socket 910, the first Cl module descrambles the first input signal and outputs the same to the first or second output signal path. In this instance, when the CAMs are inserted into the first and second Cl modules 910 and 920, the output of the first Cl module 910 can be supplied to the second Cl module 920.

When the second input signal TS_IN_2 is that of a paid broadcast, the first input signal TS_IN_1 is identical with the case of the paid broadcast and is substituted with the second input signal.

When all the first and second input signals are those of paid broadcasts, the Cl controller 700 supplies the first input signal to a slot of the CAM identical with the CAM of the paid broadcast of the first signal and the second input signal to a slot of the CAM identical with the CAM of the paid broadcast of the second signal, and when the host CPU 812 directs the first output signal TS_OUT_1 to either the Cl module A or the Cl module B, the second output signal TS_OUT_2 is connected to the remaining Cl module. In the case the scrambled paid broadcast has a different method, the CAM of the Cl module is identical, and one of the scrambled paid broadcasts has a CAM method identical with that of the multiCAM method, the scrambled signals are supplied to the Cl module A and then to the Cl module B and are provided to the output terminal. At this time, the host CPU determines whether the output signal is the first output signal TS_OUT_1 or the second output signal TS_OUT_2.

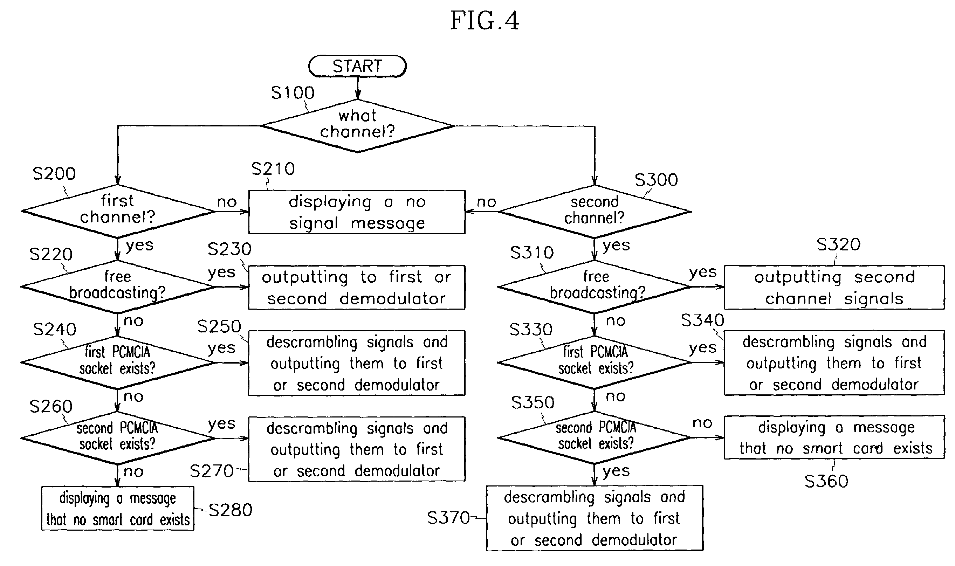

FIG. 4 shows a flow chart of a method for receiving multichannel signals according to the preferred embodiment of the present invention.

Referring to FIG. 4, a selection of channel is checked in step S100. In the case the first channel is selected, it is checked whether first channel signals are received in step S200. When the first channel signals are not received, a message that no signal is provided is displayed in step S210. When the first channel signals are received, it is checked whether the first channel signals are those of a free broadcast in step S220, and when it is a free broadcast, the first channel signals are passed through the Cl module and provided to a first or a second demodulator in step S230.

When the first channel signals are those of a paid broadcast, the existence state of a first PCMCIA socket is checked in step S240, and when the first PCMCIA socket exists, first channel information is transmitted to the first PCMCIA socket to be descrambled, and when an identical CAM is provided to the first or second demodulator or a second PCMCIA socket, the descrambled information is provided to a second demodulator in step S250.

When no first PCMCIA socket exists in the previous step S240, the existence state of the second PCMCIA socket is checked in step S260, and when the second PCMCIA socket exists, the first channel information is transmitted to the second PCMCIA socket, it is descrambled and output to the first or second demodulator (not illustrated) in step S270. When the second PCMCIA socket is found in the previous step S260, a message that shows no smart card for the paid broadcast is provided is displayed in step S280.

In the case the second channel is selected in the previous step S100, it is checked whether second channel signals are received in step S300. When the second channel signals are not received, a message that no signal is provided is displayed in step S210. When the second channel signals are received, it is checked whether the second channel signals are those of a free broadcast in step S310, and when it is a free broadcast, the second channel signals are passed through the Cl module and provided to the first or second demodulator in step S320.

When the second channel signals are those of a paid broadcast, the existence state of a first PCMCIA socket is checked in step S330, and when the first PCMCIA socket exists, second channel information is transmitted to the first PCMCIA socket to be descrambled, and when an identical CAM is provided to the first or second demodulator or a second PCMCIA socket, the descrambled information is provided to the second demodulator in step S340.

When no first PCMCIA socket exists in the previous step S330, the existence state of the second PCMCIA socket is checked in step S350, and in the case no second PCMCIA socket exists, a message that shows no smart card exists is displayed in step S360. When the second PCMCIA socket exists in the previous step S350, the second channel information is transmitted to the second PCMCIA socket to be descrambled, and it is output to the first or second demodulator in step S370.

According to the present invention, by designing a common interface controller for receiving plural channels of the common interface standard that represents one of the methods for scrambling paid broadcast of the digital satellite broadcasting, a user can receive free and paid broadcasting signals of different channels via a plurality of displays by using a single set-top box.

Also, by using the set-top box that includes the common interface controller for concurrently receiving multichannel signals, the user can watch a plurality of free and paid broadcasting signals via the picture-in-picture (PIP) method using a single display.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

## Claims

1. In a satellite broadcasting receiver for receiving scrambled or unscrambled digital satellite broadcasting signals, demultiplexing the signals, decoding the signals and outputting audio and video signals, a multichannel signal receiver comprising:
a descrambler including a plurality of descrambling units for descrambling the scrambled digital satellite broadcasting signals;
a signal receiver for receiving at least one digital satellite broadcasting signal via at least one antenna, and outputting the digital satellite broadcasting signal;
a signal output unit for demultiplexing the digital satellite broadcasting signal, demodulating the signal, and outputting audio and video signals;
a common interface controller for checking whether the digital satellite broadcasting signal provided by the signal receiver is a paid signal or a free signal, outputting the digital satellite broadcasting signal to the signal output unit when the digital satellite broadcasting signal is a free signal, and outputting the digital satellite broadcasting signal to the descrambler and outputting a descrambled digital satellite broadcasting signal to the signal output unit when the digital satellite broadcasting signal is a paid signal; and
a host central processing unit (CPU) for controlling the signal receiver, the common interface controller and the signal output unit.

2. The receiver of claim 1, wherein the satellite broadcasting signal is scrambled by one of Viaccess, Conax, Cryptwork, Irdeto and Nagravision methods.

3. The receiver of claim 1, wherein the descrambling process is performed by a common interface module.

4. The receiver of claim 1, wherein the common interface controller comprises:
a transport stream interface for receiving at least one digital satellite broadcasting signal from the signal receiver, checking whether the digital satellite broadcasting signal is a paid broadcasting signal, supplying the checked paid broadcasting signal to the descrambler, controlling the descrambling process, and outputting the descrambled broadcasting signal provided by the descrambler to the signal output unit;
a host interface for controlling at least one common interface module of the descrambler according to the control of the host CPU; and
an inter integrated circuit (I²C) interface for controlling the host interface and the transport stream interface according to the control of the host CPU.

5. The receiver of claim 1, wherein the common interface controller outputs a time lapse message when a number of the paid digital satellite broadcasting signals is greater than the number of descrambling units.

6. In a satellite broadcasting signal receiving method for receiving scrambled or unscrambled digital satellite broadcasting signals, demultiplexing the signals, decoding the signals and outputting audio and video signals, a method for controlling a multichannel signal receiver comprising:
(a) selecting at least one receiving channel of the digital satellite broadcasting signals according to a driving of the receiver;
(b) checking a receipt state of a broadcasting signal of the selected broadcasting signals in (a), and outputting a warning message that no signal is received when the broadcasting signal is not received, and checking whether the broadcasting signal is a paid signal when the broadcasting signal is received;
(c) demultiplexing the corresponding broadcasting signal, decoding the signal and outputting the signal when the received broadcasting signal is that of a free broadcast in (b); and
(d) descrambling the corresponding broadcasting signal, demultiplexing the descrambled broadcasting signal and decoding the same when the received broadcasting signal is that of a paid broadcast in (b).

7. The method of claim 6, wherein (d) comprises:
(d-1) checking whether a descrambler for descrambling the scrambled broadcasting signal is provided;
(d-2) descrambling the broadcasting signal, demultiplexing the signal, demodulating the signal and outputting the signal when the descrambler is provided in (d-1); and
(d-3) displaying a message that no smart card for descrambling the broadcasting signal is provided when the descrambler is not provided in (d-1).

8. The method of claim 7, wherein a time-lapse message is displayed when at least two descrambling units are provided and the number of the scrambled broadcasting signals is greater than the number of descrambling units.

9. The method of claim 6, wherein the descrambled broadcasting signals are demultiplexed, decoded and output via respective different paths when at least two descrambled broadcasting signals are provided.
